# EUROPÄISCHE PATENTSCHRIFT

(11) **EP 4 584 481 B1**
(45) Veröffentlichungstag und Bekanntmachung des Hinweises auf die Patenterteilung: **22.10.2025**
(21) Anmeldenummer: 24733070.7
(22) Anmeldetag: 04.06.2024
(51) Int. Cl.: F01N 3/20, F01N 13/00

(54) **VERFAHREN ZUR REINIGUNG VON ABGAS EINES KRAFTFAHRZEUGVERBRENNUNGSMOTORS UND ABGASREINIGUNGSANLAGE HIERFÜR**
METHOD FOR PURIFYING EXHAUST GAS OF A MOTOR VEHICLE INTERNAL COMBUSTION ENGINE, AND EXHAUST GAS PURIFICATION SYSTEM HEREFOR
PROCÉDÉ DE PURIFICATION DE GAZ D'ÉCHAPPEMENT D'UN MOTEUR À COMBUSTION INTERNE DE VÉHICULE AUTOMOBILE, ET SYSTÈME DE PURIFICATION DE GAZ D'ÉCHAPPEMENT ASSOCIÉ

(30) Priorität: 05.06.2023 AT 504392023
(43) Veröffentlichungstag der Anmeldung: 16.07.2025
(73) Patentinhaber: AVL List GmbH, 8020 Graz (AT)
(72) Erfinder: MICHELITSCH, Philipp, 8580 Köflach (AT); WANCURA, Hannes, 8113 St. Oswald bei Plankenwarth (AT)
(86) Internationale Anmeldenummer: PCT/AT2024/060217
(87) Internationale Veröffentlichungsnummer: WO 2024/250047

(56) Entgegenhaltungen:
- DE-A1- 102013 019 025
- DE-A1- 102017 009 612
- US-A1- 2010 326 052

## Beschreibung

Die Erfindung betrifft ein Verfahren zur Reinigung eines Kraftfahrzeugverbrennungsmotors mit den Merkmalen des Oberbegriffs des Anspruchs 1 sowie eine Abgasreinigungsanlage mit den Merkmalen des Oberbegriffs des Anspruchs 10.

Zur Reinigung von Verbrennungsmotorenabgas ist es bekannt, im Abgas enthaltene Stickoxide (NOx) durch selektive Reduktion mit Ammoniak (NH₃) als selektiv wirkendem Reduktionsmittel zu entfernen. Im Zuge sich verschärfender Anforderungen wurden Abgasreinigungsanlagen vorgeschlagen, welche zwei hintereinander angeordnete SCR-Systeme aufweisen, an welchen jeweils eine selektive Reduktion von NOx erfolgen kann. Dabei werden SCR-katalytisch wirksame Bauteile eingesetzt, welche meist nicht unbeträchtliche Mengen von NH₃ einspeichern können. Im Abgas enthaltenes NOx reagiert mit diesem eingespeicherten NH₃ zumindest weitgehen zu Stickstoff (N₂) und wird so aus dem Abgas entfernt. Zur Kontrolle dieses Prozesses wird oftmals versucht die eingespeicherte NH₃-Menge auf einen geeigneten Sollwert einzustellen. Beispielsweise wird in der DE 10 2017 127 473 A1 eine dementsprechende Abgasreinigungsanlage bzw. ein dementsprechendes Abgasreinigungsverfahren vorgeschlagen, bei welchem eine Dosierrate eines NH₃ enthaltenen Reduktionsmittels in Abhängigkeit der NH₃-Beladung von SCR-Katalysatoren eingestellt wird.

In der Praxis hat es sich jedoch oftmals als schwierig erwiesen, eine entsprechende Reduktionsmitteldosierrate mit der für eine höchstmögliche NOx-Reduktion erforderlichen Zuverlässigkeit und Genauigkeit zu ermitteln.

Ein Verfahren zur Reinigung von Abgas eines Kraftfahrzeugverbrennungsmotors und Abgasreinigungsanlage hierfür sind beispielsweise aus der DE 10 2017 009612 A1 bekannt.

Vor diesem Hintergrund ist es Aufgabe der Erfindung, über eine verbesserte Kontrolle der Reduktionsmitteldosierrate und der in einem SCR-Katalysator eingespeicherten NH₃-Menge ein Verfahren anzugeben, welches eine möglichst vollständige Entfernung von NOx aus dem Abgas eines Kraftfahrzeugverbrennungsmotors ermöglicht. Außerdem ist es Aufgabe der Erfindung, eine dementsprechende Abgasreinigungsanlage anzugeben.

Diese Aufgaben werden durch ein Verfahren mit den Merkmalen des Anspruchs 1 und durch eine Abgasreinigungsanlage mit den Merkmalen des Anspruchs 12 gelöst.

Bei dem erfindungsgemäßen Verfahren zur Reinigung von Abgas eines Kraftfahrzeugverbrennungsmotors mit einer Abgasreinigungsanlage, welche ein erstes, stromaufwärtiges SCR-System und ein nachgeschaltetes zweites SCR-System mit einem SCR-Katalysator aufweist, wird eine Eindosierung eines Ammoniak enthaltenden Reduktionsmittels in das Abgas mit einer eintrittseitig des ersten SCR-Systems angeordneten ersten Dosiereinrichtung und mit einer eintrittseitig des zweiten SCR-Systems angeordneten zweiten Dosiereinrichtung vorgenommen und im Abgas enthaltene Stickoxide werden durch eine selektive Reduktion mit in dem eindosiertem Reduktionsmittel enthaltenem und/oder daraus freigesetzten Ammoniak im ersten und im zweiten SCR-System zumindest weitgehend aus dem Abgas entfernt. Durch Eindosierung von Reduktionsmittel mit der zweiten Dosiereinrichtung wird eine Menge von im SCR-Katalysator des zweiten SCR-System eingespeichertem Ammoniak wenigstens annähernd auf einen vorgebbaren Sollwert eingestellt. In Abhängigkeit vom vorgegebenen Sollwert wird eine Reduktionsmitteldosierrate für die zweite Dosiereinrichtung ermittelt. Dabei wird erfindungsgemäß bei der Ermittlung der Reduktionsmitteldosierrate für die zweite Dosiereinrichtung ein Verbrauch von im SCR-Katalysator des zweiten SCR-Systems eingespeichertem Ammoniak durch Umsetzung mit einer in den SCR-Katalysator eingetragenen Menge von Lachgas berücksichtigt.

Die Erfinder haben in umfangreichen Untersuchungen erkannt, dass eine Umsetzung von im SCR-Katalysator eingespeichertem Ammoniak (nachfolgend abgekürzt auch als Ammoniakbeladung oder Ammoniakfüllstand bezeichnet) nicht ausschließlich mit den im Abgas enthaltenen Stickoxiden NO und NO₂ erfolgt, sondern dass auch eine Umsetzung mit in den SCR-Katalysator eingetragenem Lachgas (N₂O) erfolgen kann. Wie festgestellt werden konnte, kann es zu einer insbesondere allmählich zunehmenden Fehldosierung des Reduktionsmittels kommen, wenn ein dadurch verursachter Verbrauch des eingespeicherten Ammoniaks unberücksichtigt bleibt. Dies verursacht wiederum eine zunehmende Abweichung der Ammoniakbeladung vom vorgegebenen Sollwert und als Folge hiervon zu einer verminderten NOx-Umsatzrate und einer entsprechend erhöhten NOx-Emission. Wird hingegen, wie erfindungsgemäß vorgesehen, bei der Ermittlung der Reduktionsmitteldosierrate für die zweite Dosiereinrichtung ein Verbrauch von im SCR-Katalysator des zweiten SCR-Systems eingespeichertem Ammoniak durch Umsetzung mit einer in den SCR-Katalysator eingetragenen Menge von Lachgas berücksichtigt, so können diese nachteiligen Effekte vermieden werden. Unter einer Rate ist dabei hier und im Folgenden ein zeitbezogener Mengenwert zu verstehen.

In Ausgestaltung der Erfindung ist vorgesehen, dass der Sollwert für die im SCR-Katalysator des zweiten SCR-Systems eingespeicherte Ammoniakmenge in Abhängigkeit wenigstens von einer Temperatur des SCR-Katalysators vorgegeben wird. Damit wird der Tatsache Rechnung getragen, dass die Ammoniak-Speicherkapazität des SCR-Katalysators mehr oder weniger stark temperaturabhängig ist. Wird der Ammoniakfüllstand temperaturabhängig vorgegeben, so trägt dies zu einer weiteren Sicherstellung einer möglichst hohen NOx-Umsetzung im zweiten SCR-Katalysator bei. Der Sollwert für den Ammoniakfüllstand kann zusätzlich in Abhängigkeit von weiteren Betriebsgrößen, wie beispielsweise Abgasraumgeschwindigkeit und Katalysatoralterungszustand vorgegeben werden.

Beim erfindungsgemäßen Verfahren wird eine Lachgaserzeugungsrate von durch Umsetzung von Ammoniak mit Stickoxiden im ersten SCR-System entstandenem Lachgas ermittelt und aus der Lachgaserzeugungsrate wird die in den SCR-Katalysator des zweiten SCR-Systems eingetragene (zeitbezogene) Menge von Lachgas ermittelt. Wie festgestellt werden konnte, ist maßgebliche Quelle des in den SCR-Katalysator des zweiten SCR-Systems eingetragenen Lachgases das erste SCR-System. Dort kann es je nach Betriebsbedingung insbesondere infolge einer Reduktion von NO₂ durch NH₃ zu einer mehr oder weniger starken Lachgasbildung kommen. Durch die Ermittlung der Lachgaserzeugungsrate wird die Lachgasbildung quantifiziert und somit kann der potentielle Einfluss des in den SCR-Katalysator des zweiten SCR-Systems eingetragenen Lachgases auf die Ammoniakbeladung genauer berücksichtigt werden.

Die Lachgaserzeugungsrate kann aus vorab empirisch gewonnenen Kennfeldern ermittelt werden, welche die Abhängigkeiten der maßgeblichen Betriebsgrößen auf die Lachgasbildung abbilden. Es ist jedoch vorzugsweise vorgesehen, wenn in weiterer Ausgestaltung des Verfahrens für das erste SCR-System ein Lachgaserzeugungsmodell vorgesehen wird, welches aus Eingangsgrößen, die zumindest eine Temperatur des ersten SCR-Systems umfassen, die Lachgaserzeugungsrate als Ausgangsgröße ermittelt. Das Lachgaserzeugungsmodell ist bevorzugt ein reaktionskinetisches Modell, welches unter Berücksichtigung der wesentlichen Einflussfaktoren die Lachgaserzeugungsrate des ersten SCR-Systems ermittelt. Dabei ist eine wesentliche Einflussgröße die Temperatur des ersten SCR-Systems. Weitere Einflussfaktoren wie Reduktionsmitteldosierrate der ersten Dosiereinrichtung und die Menge von in das erste SCR-System eingetragenem NOx werden vorzugsweise ebenfalls berücksichtigt.

Beim erfindungsgemäßen Verfahren ist es weiter vorgesehen, dass für die im SCR-Katalysator des zweiten SCR-System eingespeicherte Ammoniakmenge ein Speichermodell vorgesehen ist, welches aus Eingangsgrößen, die zumindest die in den SCR-Katalysator eingetragene Menge von Stickoxiden, die Lachgaserzeugungsrate und die Reduktionsmitteldosierrate für die zweite Dosiereinrichtung umfassen, eine modellierte Istmenge von im SCR-Katalysator eingespeichertem Ammoniak als Ausgangsgröße ermittelt wird. Bei dem Speichermodell handelt es sich vorzugsweise ebenfalls um ein reaktionskinetisches Modell, welches eine Kinetik der Umsetzung von in den SCR-Katalysator eingetragenen Spezies, insbesondere von NOx, Ammoniak und erfindungsgemäß auch Lachgas berücksichtigt. Weitere Einflussfaktoren bzw. Eingangsgrößen wie beispielsweise die Temperatur des SCR-Katalysators oder die des in ihn eingetragenen Abgases sowie eine Direktoxidation von Ammoniak, der Alterungszustand des Katalysators und gegebenenfalls weitere können natürlich ebenfalls berücksichtigt werden.

In einer weiteren Ausgestaltung des Verfahrens ist es vorgesehen, dass in dem Speichermodell ein Wirkungsgrad für die Umsetzung von Lachgas mit Ammoniak im SCR-Katalysator des zweiten SCR-Systems berücksichtigt wird. Hierfür wird der Lachgasumsetzungs-Wirkungsgrad als eine weitere Eingangsgröße dem Speichermodell zugeführt. Dadurch wird berücksichtigt, dass gegebenenfalls nur ein bestimmter Bruchteil des in den SCR-Katalysator eingetragenen Lachgases sich auch tatsächlich mit eingespeichertem Lachgas umsetzt. Es kann außerdem zusätzlich vorgesehen sein, dass in dem Speichermodell analog auch ein Wirkungsgrad für die Umsetzung von NOx mit Ammoniak berücksichtigt wird.

In weiterer Ausgestaltung des Verfahrens wird für einen die im SCR-Katalysator des zweiten SCR-System eingespeicherte Ammoniakmenge repräsentierenden Ammoniak-Füllstand eine Füllstandsregelung vorgenommen. Dadurch ist es ermöglicht sehr zuverlässig den vorgesehenen Sollwert für die Ammoniakbeladung des SCR-Katalysators einzustellen.

Dabei ist es in weiterer Ausgestaltung des Verfahrens vorgesehen, dass bei der Füllstandsregelung der Sollwert für die im SCR-Katalysator des zweiten SCR-Systems eingespeicherte Ammoniakmenge als Führungsgröße und die im Speichermodell bestimmte modellierte Istmenge von im SCR-Katalysator eingespeichertem Ammoniak als rückgeführte Messgröße im Regelkreis der Füllstandsregelung herangezogen werden.

Weiterhin ist es in Ausgestaltung des Verfahrens vorgesehen, dass bei der Füllstandsregelung ein die Reduktionsmitteldosierrate für die zweite Dosiereinrichtung bestimmendes Steuersignal als Stellgröße generiert wird.

In weiterer Ausgestaltung des Verfahrens ist es vorgesehen, dass bei einer Aufteilung einer gesamten (zeitbezogenen) Reduktionsmitteldosiermenge für die Abgasreinigungsanlage auf die erste und die zweite Dosiereinrichtung ein Umsatzvermögen für Stickoxide eines jeweiligen SCR-Systems berücksichtigt wird. Die Dosierraten für die erste und die zweite Dosiereinrichtung orientiert sich somit am Umsatzvermögen des jeweils zugeordneten SCR-Systems. Vorzugsweise wird diejenige Dosiereinrichtung zur Dosierung eines größeren Bruchteils der gesamten Reduktionsmitteldosiermenge angesteuert, welche dem SCR-System mit dem aktuell größeren NOx-Umsatzvermögen der beiden SCR-Systeme zugeordnet ist. Dabei ist in einer weiteren vorteilhaften Ausgestaltung des Verfahrens vorgesehen, dass bei der Aufteilung der gesamten Reduktionsmitteldosiermenge zusätzlich die Lachgaserzeugungsrate des ersten SCR-Systems berücksichtigt wird. Hierfür kann beispielsweise für die sich aus den NOx-Umsatzvermögen des ersten und zweiten SCR-Systems ergebende Verteilung der gesamten Reduktionsmitteldosiermenge eine Gewichtung oder Korrektur für die Dosierrate der ersten Dosiereinrichtung vorgesehen sein. Diese wirkt vorzugsweise derart, dass die Dosierrate der ersten Dosiereinrichtung bei einer hohen Lachgaserzeugungsrate des ersten SCR-Systems tendenziell verringert und bei einer niedrigen Lachgaserzeugungsrate tendenziell erhöht wird. Auf diese Weise kann durch eine dementsprechende Aufteilung der gesamten Reduktionsmitteldosiermenge im Sinne einer niedrigen Lachgasbildung am ersten SCR-System eingewirkt werden.

Was die erfindungsgemäße Abgasreinigungsanlage für einen Kraftfahrzeugverbrennungsmotor betrifft, so weist diese ein erstes, stromaufwärtiges SCR-System und ein nachgeschaltetes zweites SCR-System mit einem SCR-Katalysator, sowie eine eintrittseitig des ersten SCR-Systems angeordnete erste Dosiereinrichtung und eine eintrittseitig des zweiten SCR-Systems angeordnete zweite Dosiereinrichtung zur Eindosierung eines Ammoniak enthaltenden Reduktionsmittels in das Abgas auf, wobei eine Steuereinrichtung vorgesehen ist, welche dazu eingerichtet ist, eine Durchführung eines Abgasreinigungsverfahrens nach einem der Ansprüche 1 bis 9 zu steuern.

Speziell kann in Ausgestaltung der Abgasreinigungsanlage vorgesehen sein, dass das erste SCR-System einen mit einer SCR-katalytisch wirksamen Beschichtung versehenen Partikelfilter aufweist. Dieses kann das einzige SCR-katalytisch wirksame Bauteil des ersten SCR-Systems sein. Es ist jedoch in einer weiteren Ausgestaltung der Erfindung vorzugsweise vorgesehen, dass dem mit einer SCR-katalytisch wirksamen Beschichtung versehenen Partikelfilter ein SCR-Katalysator vorgeschaltet ist. Alternativ kann der SCR-Katalysator dem Partikelfilter auch nachgeschaltet sein.

In einer weiteren Ausgestaltung der Abgasreinigungsanlage ist vorgesehen, dass der SCR-Katalysator des zweiten SCR-Systems zweiteilig ausgeführt ist. Dabei ist vorzugsweise vorgesehen, dass ein erster, stromaufwärtiger Teil des SCR-Katalysators eine Eisen enthaltende Beschichtung aufweist und ein zweiter stromabwärtiger des SCR-Katalysators eine Kupfer enthaltende Beschichtung aufweist. Vorzugsweise handelt es bei den Beschichtungen um mit diesen Metallen ausgetauschte Zeolithe.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: ein schematisches Blockbild einer an einen Kraftfahrzeugverbrennungsmotor angeschlossenen Abgasreinigungsanlage und
- Fig. 2: ein schematisches Blockbild zur Veranschaulichung der Ansteuerung der zweiten Reduktionsmitteldosiereinrichtung.

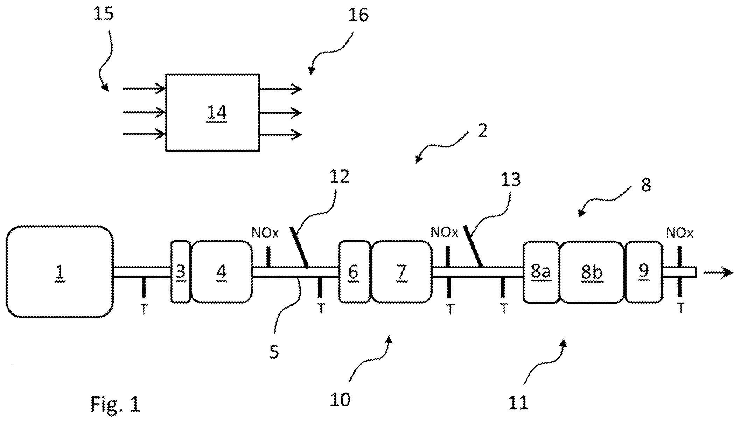

Fig. 1 zeigt lediglich schematisch und beispielhaft ein Blockbild eines Systems mit einem Verbrennungsmotor 1 eines nicht dargestellten Kraftfahrzeugs und zugehöriger Abgasreinigungsanlage 2. Der Verbrennungsmotor 1 ist vorzugsweise als luftverdichtende Brennkraftmaschine, nachfolgend vereinfacht als Dieselmotor bezeichnet, ausgebildet. Es kann sich jedoch auch um einen mit Benzin oder Gas betriebenen Ottomotor handeln. Das vom Dieselmotor 1 ausgestoßene Abgas strömt über eine Turbine eines nicht dargestellten Abgasturboladers und wird von einer Abgasleitung 5 aufgenommen. In der Abgasleitung 5 sind in Abgasströmungsrichtung gesehen hintereinander ein elektrisches Heizelement 3, ein erster Oxidationskatalysator 4, ein erstes SCR-System 10 und ein zweites SCR-System 11 angeordnet. Auf das Heizelement kann gegebenenfalls auch verzichtet werden. Das erste SCR-System 10 weist vorliegend unmittelbar hintereinander angeordnet einen ersten SCR-Katalysator 6 und ein nachgeschaltetes Partikelfilter 7 auf. Es kann jedoch auch eine umgekehrte Reihenfolge von Partikelfilter 7 und SCR-Katalysator 6 vorgesehen sein oder auf den SCR-Katalysator 6 verzichtet werden. Vorzugsweise sind die Bauteile des ersten SCR-Systems 10 eng benachbart in einem gemeinsamen Gehäuse angeordnet.

Das elektrische Heizelement 3 und der erste Oxidationskatalysator 4 sind vorliegend motornah, d.h. in einem Motorraum nahe am Abgasaustritt aus dem Dieselmotor 1 bzw. der Abgasturboladerturbine angeordnet. Ebenfalls relativ motornah, d.h. ebenfalls im Motorraum ist das erste SCR-System 10 angeordnet, während das zweite SCR-System 11 vorliegend motorfern, außerhalb des Motorraums und vorzugsweise in einem Unterbodenbereich des Kraftfahrzeugs angeordnet ist.

Das zweite SCR-System 11 weist unmittelbar hintereinander angeordnet einen zweiten SCR-Katalysator 8 und einen zweiten Oxidationskatalysator 9 auf. Der zweite SCR-Katalysator 8 umfasst vorliegend zwei Teile 8a und 8b und ist somit zweiteilig ausgeführt. Die beiden SCR-Katalysatorteile 8a und 8b können als zwei getrennte, eng benachbart angeordnete Bauteile ausgeführt sein. Es kann sich jedoch auch um zwei unterschiedlich ausgeführte Bereiche eines einzelnen Bauteils handeln. Die Bauteile des zweiten SCR-Systems 11 sind vorzugsweise ebenfalls in einem gemeinsamen Gehäuse angeordnet.

Weiterhin umfasst die Abgasreinigungsanlage 2 eine erste Reduktionsmittel-Dosiereinrichtung 12 sowie eine zweite Reduktionsmittel-Dosiereinrichtung 13, welche dem ersten SCR-System 10 bzw. dem zweiten SCR-System 11 vorgeschaltet sind. Somit ist die erste Dosiereinrichtung 12 strömungsmäßig zwischen dem ersten Oxidationskatalysator 4 und dem ersten SCR-System 10 angeordnet. Die zweite Dosiereinrichtung 13 ist strömungsmäßig zwischen dem ersten SCR-System 10 und dem zweiten SCR-System 11 angeordnet. Die Reduktionsmittel-Dosiereinrichtungen 12, 13 können ein der NOx-Reduktion dienendes Reduktionsmittel fein verteilt in die Abgasleitung 5 einsprühen und sind hierfür an einen Reduktionsmittelbehälter angeschlossen, was nicht gesondert dargestellt ist. Als NOx-spezifisches Reduktionsmittel wird eine Substanz eingesetzt, welche NH₃ enthält oder aus der NH₃ insbesondere durch Thermolyse und/oder Hydrolyse im Abgas freigesetzt werden kann. Nachfolgend wird ohne Einschränkung der Allgemeinheit davon ausgegangen, dass es sich bei dem Reduktionsmittel um wässrige Harnstofflösung handelt. Für eine besonders gleichmäßige Verteilung der über die Dosiereinrichtungen 12, 13 dem Abgas zugeführten Harnstofflösung können Mischer zwischen der ersten Dosiereinrichtung 12 und dem ersten SCR-System 10 bzw. der zweiten Dosiereinrichtung 13 und dem zweiten SCR-System 11 in der Abgasleitung 5 vorgesehen sein, was hier nicht gesondert dargestellt ist.

Eine mengenmäßig geregelte Dosierung des Reduktionsmittels kann durch entsprechende Ansteuerung der Dosiereinrichtungen 12, 13 und/oder eine nicht dargestellte jeweilige Fördereinheit erfolgen.

In der Abgasreinigungsanlage 2 sind diverse Sensoren für Temperatur, NOx- und NH₃-Konzentration vorgesehen, deren Signale von einer Steuereinrichtung 14 ausgewertet werden und zur Einstellung von Betriebsparametern und insbesondere der Reduktionsmittel-Dosiermengen herangezogen werden. Die Sensoren für Temperatur und NOx bzw. NH₃ sind in Fig. 1 pauschal mit den Buchstaben 'T' bzw. 'NOx' gekennzeichnet.

Die Steuereinrichtung 14 dient der Steuerung des Betriebs der Abgasreinigungsanlage 2. Hierzu erhält die Steuereinrichtung 14 Eingangssignale 15, verarbeitet diese und erzeugt daraus Ausgangssignale 16. Die Eingangssignale 15 umfassen insbesondere Signale der in der Abgasreinigungsanlage 2 verbauten Sensoren T für Temperatur und NOx für NOx- bzw. NH₃-Gehalte im Abgas. Von der Steuereinrichtung 14 können jedoch auch Betriebsgrößen des Dieselmotors 1 repräsentierende Eingangssignale verarbeitet werden. Die Ausgangssignale 16 umfassen insbesondere Steuersignale zur Ansteuerung der Dosiereinrichtungen 12, 13. Die Steuereinrichtung 14 kann beispielsweise als Mikrokontroller ausgebildet sein, der auf in einem zugeordneten Speicher abgespeicherte Kennfelder bzw. Kennlinien für Abhängigkeiten von Betriebsgrößen der Abgasreinigungsanlage 2 zugreifen kann. Ein Ablauf der durch die Steuereinrichtung 14 bewirkten Steuerungs- und Regelvorgänge wird vorzugsweise durch ein abgespeichertes Programm bewirkt. Weiter unten wird näher auf wesentliche Steuerfunktionen der Steuereinrichtung 14 eingegangen.

Das elektrische Heizelement 3 ist bevorzugt als kompakte separate Baueinheit ausgeführt. Es weist bevorzugt als Widerstandsheizung ausgebildete beheizte Bestandteile auf, die von Abgas angeströmt bzw. umströmt werden können, so dass eine effektive Wärmeübertragung auf das Abgas und damit auf stromab angeordneten Bauteile ermöglicht ist. Prinzipiell können alle gebräuchlichen Arten von Heizelementen eingesetzt werden. Eine vorteilhafte Ausführungsform ist ein Metallfolien-Trägerkörper. Von Abgas an- bzw. umströmbare Flächen können dabei eine katalytisch wirksame Beschichtung aufweisen. Das elektrische Heizelement 3 dient insbesondere der raschen Abgasaufheizung in Verbindung mit einem Kaltstart oder Warmlauf des Dieselmotors 1 sowie der Unterstützung einer thermisch induzierten Rußregeneration des Partikelfilters 7.

Die Katalysatoren 4, 6, 8a, 8b und 9 sind bevorzugt als insbesondere keramische Wabenkörper mit durchgehenden, parallelen Kanälen ausgebildet. Dabei sind die mit dem Abgas in Kontakt kommenden Kanalwände mit einer Trägersubstanz mit hoher spezifischer Oberfläche beschichtet, welche eine jeweils spezifische katalytisch wirksame Substanz enthält. Als katalytisch wirksame Substanz der Oxidationskatalysatoren 4, 9 kann es sich um ein fein dispergiertes Metall der Platingruppe wie Platin, Palladium und/oder Rhodium handeln. Beim ersten Oxidationskatalysator 4 bewirkt die oxidationskatalytisch wirksame Beschichtung einerseits einer Oxidation eines Anteils von im Abgas enthaltenem Stickstoffmonoxid (NO) zu Stickstoffdioxid (NO₂), was eine NOx-Reduktion insbesondere an dem nachgeschalteten ersten SCR-System 10 speziell bei niedrigen Temperaturen verbessert. Andererseits kann durch Oxidation von dem Abgas gezielt zugeführten unverbrannten Kohlenwasserstoffen eine Abgastemperaturanhebung für eine thermische Rußregeneration des Partikelfilters 7 erreicht werden. Die oxidationskatalytisch wirksame Beschichtung des zweiten Oxidationskatalysators 9 bewirkt insbesondere eine Oxidation von gegebenenfalls im Abgas verbliebenen NHs-Resten oder beispielsweise bei einer raschen Temperaturerhöhung vom zweiten SCR-Katalysator 8 desorbiertem NH₃. Der zweite Oxidationskatalysator 9 kann deshalb auch als Ammoniak-Sperrkatalysator bezeichnet werden.

Der Partikelfilter 7 ist bevorzugt als wanddurchströmter Filter in Wabenkörperbauweise (sog. wall-flow Filter) mit eingangsseitig und ausgangsseitig wechselweise verschlossenen Kanälen ausgebildet. Der Partikelfilter 7 weist eine SCR-katalytisch wirksame Beschichtung auf, welche auf den Rohgasseiten und/oder Reingasseiten der filterwirksamen Kanalwände aufgebracht oder in diese infiltriert ist.

Unter einer SCR-katalytisch wirksamen Beschichtung ist im Rahmen der Erfindung eine Beschichtung zu verstehen, die eine Reduktion von NOx auch bei Anwesenheit eines Sauerstoffüberschusses im Abgas mit eingespeichertem und/oder zugeführtem NH₃ als NOx-selektivem Reduktionsmittel katalysieren kann. Bei der SCR-katalytisch wirksamen Beschichtung handelt es sich bevorzugt um einen Zeolithen, welcher eine SCR-katalytische Aktivkomponente enthält. Dabei ist vorgesehen, für die SCR-Katalysatoren 6 und 8 sowie für den Partikelfilter 7 Beschichtungen zu wählen, welche eine Einspeicherung von NH₃ ermöglichen. Vorliegend weisen der Partikelfilter 7 sowie der erste SCR-Katalysator 6 Kupfer oder Eisen als SCR-katalytische Aktivkomponente auf. Kupfer als SCR-katalytische Aktivkomponente ist jedoch aufgrund eines vergleichsweise hohen Umsatzvermögens bei niedrigen Temperaturen und einer geringeren Lachgasbildung bevorzugt.

Was den SCR-Katalysator 8 des zweiten SCR-Systems 11 betrifft, so ist für dessen ersten Teil 8a vorzugsweise eine Eisen enthaltende zeolithische Beschichtung vorgesehen. Der zweite Teil 8b weist vorzugsweise eine Kupfer enthaltende Beschichtung auf. Dadurch können auch hier die Vorteile eines hohen Umsatzvermögens bei niedrigen Temperaturen und einer geringeren Lachgasbildung genutzt werden.

Nachfolgend wird auf ein bevorzugtes Betriebsverfahren für die erfindungsgemäße Abgasreinigungsanlage 2 eingegangen. Dieses betrifft hauptsächlich die Einstellung der durch die Dosiereinrichtungen 12, 13 zu dosierenden Reduktionsmittelmengen. In einer hier lediglich beispielhaft geschilderten Vorgehensweise wird von der Regeleinrichtung 14 anhand von Betriebsgrößen wie Abgastemperatur, Abgasmassenstrom und eintrittseitig des ersten SCR-Systems 10 vorliegenden NOx-Konzentration im Abgas eine zur möglichst vollständigen Entfernung von NOx erforderliche zeitbezogene Gesamtdosiermenge von Reduktionsmittel ermittelt. Anhand der vorliegenden Betriebszustände für die beiden SCR-Systeme 10, 11 wird deren NOx-Umsatzvermögen ermittelt und daraus eine Aufteilung der Gesamtdosiermenge auf die beiden Dosiereinrichtungen 12, 13 zumindest annähernd festgelegt. Dabei wird vorzugsweise für das SCR-System 10, 11, welches ein höheres NOx-Umsatzvermögen aufweist, eine Dosierrate eingestellt, welche einem höheren Anteil der Gesamtdosiermenge entspricht.

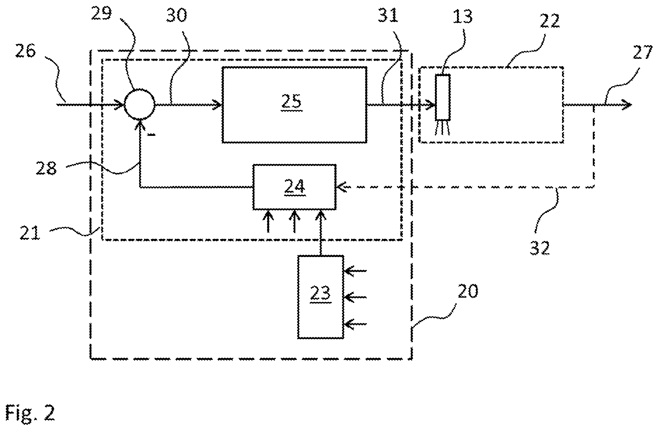

Eine vorzugsweise vorgesehene Vorgehensweise zur exakten Einstellung für die Dosierrate der zweiten Dosiereinrichtung 13 wird nachfolgend näher unter Bezug auf Fig. 2 erläutert.

In Fig. 2 ist schematisch als Blockbild eine vorteilhafte Ausführungsform eines Regelmoduls 20 dargestellt, durch welches eine Einstellung der Dosierrate der zweiten Dosiereinrichtung 13 erfolgt. Das Regelmodul 10 ist dabei vorzugsweise in die Regeleinrichtung 14 integriert und somit Teil der Regeleinrichtung 14. Dabei ist das in Fig. 2 dargestellte Regelmodul als nichteinschränkende Verkörperung für die Ansteuerung der zweiten Dosiereinrichtung 13 zu verstehen, welche lediglich zur Veranschaulichung einer bevorzugten Vorgehensweise hierfür dient.

Das Regelmodul 20 weist vorliegend einen Füllstandsregler 21 zur Einregelung der Ammoniakbeladung des SCR-Katalysators 8 des zweiten SCR-Systems 11, nachfolgend vereinfacht als Füllstand bezeichnet, auf. Der Füllstandsregler 21 arbeitet vorliegend als klassischer Regelkreis. Hierzu wird ihm ein Füllstands-Sollwert 26 als Führungsgröße zugeführt. Der Füllstands-Sollwert 26 stellt somit einen Sollwert für die im SCR-Katalysator 8 des zweiten SCR-Systems 11 eingespeicherte Ammoniakmenge dar. Der Füllstands-Sollwert 26 wird vorzugsweise durch die Regeleinrichtung 14 in Abhängigkeit von maßgeblichen Betriebsgrößen wie Temperatur, NOx-Gehalt des Abgases vorgegeben. Eine Korrektur- und Stelleinrichtung 25 des Füllstandsreglers 21 erzeugt ein auf die zweite Dosiereinrichtung 13 einwirkendes, deren Reduktionsmitteldosierrate bestimmendes Stellsignal als Stellgröße 31. Dabei ist die zweite Dosiereinrichtung 13 ein Teil einer Regelstrecke 22 anzusehen, zu welcher auch das zweite SCR-System 11 selbst zu zählen ist.

Aufgrund der so eingestellten Dosierrate der zweiten Dosiereinrichtung 13 ergibt sich ein Füllstands-Istwert 27 für die im SCR-Katalysator Ammoniakmenge. Es ist angestrebt, den Füllstands-Istwert 27 möglichst genau auf den Füllstands-Sollwert 26 einzuregeln. Allerdings ist es technisch kaum möglich, den Füllstands-Istwert 27, d.h. die tatsächliche Istmenge von im SCR-Katalysator 8 eingespeichertem Ammoniak messtechnisch zu erfassen. Um den Füllstands-Istwert 27 im Regelkreis dennoch zurückführen zu können, ist vorliegend ein Speichermodell 24 vorgesehen. Durch das Speichermodell 24 wird eine modellierte Istmenge von im SCR-Katalysator 8 eingespeichertem Ammoniak ermittelt und als (modellierter) Füllstands-Istwert 28 zu einem Summierglied 29 des Füllstandsreglers zurückgeführt. Somit kann der modellierte Füllstands-Istwert 28 auch als Ersatz für einen messtechnisch erfassten Wert des tatsächlichen Füllstands-Istwerts 27 angesehen werden, was durch den gestrichelt gezeichneten Signalpfeil 32 dargestellt ist. Im Summierglied 29 wird die Differenz von Füllstands-Sollwert 26 und modelliertem Füllstands-Istwert 28 gebildet. Diese Regeldifferenz 30 wird wiederum der Korrektur- und Stelleinrichtung 25 zugeführt.

Das Speichermodell 24 ist vorzugsweise als reaktionskinetisches Modell ausgebildet. Darin werden Ammoniak verbrauchende Vorgänge im Katalysator 8, wie Reaktion von Ammoniak mit NOx, Ammoniak-Direktoxidation, Ammoniak-Schlupf mit einem Ammoniak-Eintrag infolge Eindosierung durch die zweite Dosiereinrichtung 13 verrechnet. Die entsprechenden Größen werden dem Speichermodell als durch in das Speichermodell 24 weisende Pfeile gekennzeichnete Eingangsgrößen zugeführt und daraus der modellierte Füllstands-Istwert 28 als Ausgangsgröße ermittelt. In diesem Zusammenhang ist es erfindungsmaßgebend, dass im Speichermodell 24 ein durch Reaktion mit in den Katalysator 8 eingetragenem Lachgas verursachter Ammoniak verbrauchender Vorgang mit berücksichtigt wird. Hierzu wird in einem Lachgaserzeugungsmodell 23 die in den SCR-Katalysator 8 des zweiten SCR-Systems 11 (zeitbezogen) eingetragene Menge von Lachgas ermittelt und eine diese Lachgasmenge repräsentierende Ausgangsgröße erzeugt. Diese wird dem Speichermodell 24 als weitere Eingangsgröße zugeführt.

Das Lachgaserzeugungsmodell 23 ist vorzugsweise ebenfalls als reaktionskinetisches Modell ausgebildet, welches eine Umsetzung von Ammoniak mit Stickoxiden zu Lachgas im ersten SCR-System 10 nachbildet. Hierzu werden dem Lachgaserzeugungsmodell 23 den Betriebszustand des ersten SCR-Systems 10 kennzeichnende Eingangsgrößen wie Temperatur, NOx- und NH₃-Eintrittsmenge, NO₂-Gehalt des eintretenden NOx usw. zugeführt. Aus diesen wird eine Lachgaserzeugungsrate des ersten SCR-Systems 10 berechnet und daraus die Ausgangsgröße ermittelt, welche dem Speichermodul 24 als Eingangsgröße zugeführt wird.

Durch die geschilderte Vorgehensweise wird ein Verbrauch von im SCR-Katalysator 8 des zweiten SCR-Systems 11 eingespeichertem Ammoniak durch Umsetzung mit einer in den SCR-Katalysator 8 eingetragenen Lachgasmenge bei der Ermittlung der Reduktionsmitteldosierrate der zweiten Dosiereinrichtung 13 berücksichtigt. Dies ermöglicht eine verbesserte Einstellung der angestrebten Ammoniakbeladung des SCR-Katalysators 8 bzw. eine genauere Einregelung von dessen Ammoniak-Füllstand. Fehldosierungen der zweiten Dosiereinrichtung13 und ein zeitliches Abdriften der angestrebten Ammoniakbeladung des SCR-Katalysators 8 können somit zuverlässig vermieden werden, wodurch auch eine verbesserte NOx-Entfernung durch das zweite SCR-System 11 und damit durch die Abgasreinigungsanlage 2 insgesamt ermöglicht wird.

Eine weiter verbesserte Genauigkeit der NH₃-Füllstandsregelung des SCR-Katalysators 8 bzw. der Reduktionsmitteldosierrate der zweiten Dosiereinrichtung 13 kann erreicht werden, wenn im Speichermodell 24 ein Wirkungsgrad für die Umsetzung von Lachgas mit Ammoniak im SCR-Katalysator 8 des zweiten SCR-Systems 11 beispielweise in Form einer weiteren Eingangsgröße berücksichtigt wird. Ebenfalls vorteilhaft ist es, wenn im Speichermodell 24 analog auch ein Wirkungsgrad für die Umsetzung von NO bzw. NO₂ mit Ammoniak im SCR-Katalysator 8 des zweiten SCR-Systems 11 bei der Ermittlung des modellierten Füllstand-Istwerts 28 berücksichtigt wird.

Weiterhin ist vorzugsweise vorgesehen, bei der Aufteilung der gesamten Reduktionsmitteldosiermenge auf die beiden Dosiereinrichtungen 12, 13 die mittels des Lachgaserzeugungsmodells 23 ermittelte Lachgaserzeugungsrate des ersten SCR-Systems 10 zu berücksichtigen. Vorzugsweise wird bei einer vergleichsweise hohen Lachgaserzeugungsrate die Dosierrate der ersten Dosiereinrichtung 12 abgeregelt. Beispielsweise kann die Abregelung proportional zur Lachgaserzeugungsrate, gegebenenfalls ab einer vorgegebenen Schwelle, vorgenommen werden.

Es wird noch angemerkt, dass für das erste SCR-System 10 ebenfalls eine Regelung der Ammoniakbeladung mittels eines zum Füllstandsregler 21 analogen Füllstandsreglers vorgenommen werden kann.

### Bezugszeichenliste

- 1: Kraftfahrzeugverbrennungsmotor
- 2: Abgasreinigungsanlage
- 3: Heizelement
- 4: Erster Oxidationskatalysator
- 5: Abgasleitung
- 6: SCR-Katalysator
- 7: Partikelfilter
- 8: SCR-Katalysator
- 8a: Erstes Katalysatorteil
- 8b: Zweites Katalysatorteil
- 9: Zweiter Oxidationskatalysator
- 10: Erstes SCR-System
- 11: Zweites SCR-System
- 12: Erste Dosiereinrichtung
- 13: Zweite Dosiereinrichtung
- 14: Steuereinrichtung
- 15: Eingangssignale
- 16: Ausgangssignale
- 20: Regelmodul
- 21: Füllstandsregler
- 22: Regelstrecke
- 23: Lachgaserzeugungsmodell
- 24: Speichermodell
- 25: Korrektur- und Stelleinrichtung
- 26: Füllstands-Sollwert
- 27: Füllstands-Istwert
- 28: Modellierter Füllstands-Istwert
- 29: Summierglied
- 30: Regeldifferenz
- 31: Stellgröße
- 32: Signalpfeil

## Patentansprüche

1. Verfahren zur Reinigung von Abgas eines Kraftfahrzeugverbrennungsmotors (1) mit einer Abgasreinigungsanlage (2), welche ein erstes, stromaufwärtiges SCR-System (10) und ein nachgeschaltetes zweites SCR-System (11) mit einem SCR-Katalysator (8) aufweist, bei welchem eine Eindosierung eines Ammoniak enthaltenden Reduktionsmittels in das Abgas mit einer eintrittseitig des ersten SCR-Systems (10) angeordneten ersten Dosiereinrichtung (12) und mit einer eintrittseitig des zweiten SCR-Systems (11) angeordneten zweiten Dosiereinrichtung (13) vorgenommen wird und im Abgas enthaltene Stickoxide durch eine selektive Reduktion mit in dem eindosierten Reduktionsmittel enthaltenem und/oder daraus freigesetzten Ammoniak im ersten und im zweiten SCR-System (10, 11) zumindest weitgehend aus dem Abgas entfernt werden, wobei durch Eindosierung von Reduktionsmittel mit der zweiten Dosiereinrichtung (13) eine Menge von im SCR-Katalysator (8) des zweiten SCR-Systems (11) eingespeichertem Ammoniak wenigstens annähernd auf einen vorgebbaren Sollwert (26) eingestellt wird und in Abhängigkeit vom vorgegebenen Sollwert (26) eine Reduktionsmitteldosierrate für die zweite Dosiereinrichtung (13) ermittelt wird, **dadurch gekennzeichnet, dass**
bei der Ermittlung der Reduktionsmitteldosierrate für die zweite Dosiereinrichtung (13) ein Verbrauch von im SCR-Katalysator (8) des zweiten SCR-Systems (11) eingespeichertem Ammoniak durch Umsetzung mit einer in den SCR-Katalysator (8) eingetragenen Menge von Lachgas berücksichtigt wird, wobei eine Lachgaserzeugungsrate von durch Umsetzung von Ammoniak mit Stickoxiden im ersten SCR-System (10) entstandenem Lachgas ermittelt wird und aus der Lachgaserzeugungsrate die in den SCR-Katalysator (8) des zweiten SCR-Systems (11) eingetragene Menge von Lachgas ermittelt wird und wobei für die im SCR-Katalysator (8) des zweiten SCR-Systems (11) eingespeicherte Ammoniakmenge ein Speichermodell (24) vorgesehen ist, welches aus Eingangsgrößen, die zumindest die in den SCR-Katalysator (8) eingetragene Mengen von Stickoxiden, die Lachgaserzeugungsrate und die Reduktionsmitteldosierrate für die zweite Dosiereinrichtung (13) umfassen, eine modellierte Istmenge (28) von im SCR-Katalysator (8) eingespeichertem Ammoniak als Ausgangsgröße ermittelt.

2. Verfahren nach Anspruch 1,
**dadurch gekennzeichnet, dass**
der Sollwert (26) für die im SCR-Katalysator (8) eingespeicherte Ammoniakmenge in Abhängigkeit wenigstens von einer Temperatur des SCR-Katalysators (8) vorgegeben wird.

3. Verfahren nach Anspruch 1 oder 2,
**dadurch gekennzeichnet, dass**
für das erste SCR-System (10) ein Lachgaserzeugungsmodell (23) vorgesehen ist, welches aus Eingangsgrößen, die zumindest eine Temperatur des ersten SCR-Systems (10) umfassen, die Lachgaserzeugungsrate als Ausgangsgröße ermittelt.

4. Verfahren nach einem der Ansprüche 1 bis 3,
**dadurch gekennzeichnet, dass**
im Speichermodell (24) ein Wirkungsgrad für die Umsetzung von Lachgas mit Ammoniak im SCR-Katalysator (8) des zweiten SCR-Systems (11) berücksichtigt wird.

5. Verfahren nach einem der Ansprüche 1 bis 4,
**dadurch gekennzeichnet, dass**
für einen die im SCR-Katalysator (8) des zweiten SCR-System (11) eingespeicherte Ammoniakmenge repräsentierenden Ammoniak-Füllstand eine Füllstandsregelung vorgenommen wird.

6. Verfahren nach einem der Ansprüche 1 bis 5,
**dadurch gekennzeichnet, dass**
bei der Füllstandsregelung der Sollwert (26) für die im SCR-Katalysator (8) des zweiten SCR-Systems (11) eingespeicherte Ammoniakmenge als Führungsgröße und die im Speichermodell (24) bestimmte Istmenge (28) von im SCR-Katalysator (8) eingespeichertem Ammoniak als rückgeführte Messgröße im Regelkreis der Füllstandsregelung herangezogen werden.

7. Verfahren nach Anspruch 5 oder 6,
**dadurch gekennzeichnet, dass**
bei der Füllstandsregelung ein die Reduktionsmitteldosierrate für die zweite Dosiereinrichtung (13) bestimmendes Steuersignal als Stellgröße (31) generiert wird.

8. Verfahren nach einem der Ansprüche 1 bis 7,
**dadurch gekennzeichnet, dass**
bei einer Aufteilung einer gesamten Reduktionsmitteldosiermenge für die Abgasreinigungsanlage (2) auf die erste und die zweite Dosiereinrichtung (12, 13) ein Umsatzvermögen für Stickoxide eines jeweiligen SCR-Systems (10, 11) berücksichtigt wird.

9. Verfahren nach Anspruch 8,
**dadurch gekennzeichnet, dass**
bei der Aufteilung der gesamten Reduktionsmitteldosiermenge zusätzlich die Lachgaserzeugungsrate des ersten SCR-Systems (10) berücksichtigt wird.

10. Abgasreinigungsanlage (2) für einen Kraftfahrzeugverbrennungsmotor (1) welche ein erstes, stromaufwärtiges SCR-System (10) und ein nachgeschaltetes zweites SCR-System (11) mit einem SCR-Katalysator (8), sowie eine eintrittseitig des ersten SCR-Systems (10) angeordnete erste Dosiereinrichtung (12) und eine eintrittseitig des zweiten SCR-Systems (11) angeordnete zweite Dosiereinrichtung (13) zur Eindosierung eines Ammoniak enthaltenden Reduktionsmittels in das Abgas aufweist,
**dadurch gekennzeichnet, dass**
eine Steuereinrichtung (14) vorgesehen ist, welche dazu eingerichtet ist, eine Durchführung eines Abgasreinigungsverfahrens nach einem der Ansprüche 1 bis 9 zu steuern.

11. Abgasreinigungsanlage (2) nach Anspruch 10,
**dadurch gekennzeichnet, dass**
das erste SCR-System (10) einen mit einer SCR-katalytisch wirksamen Beschichtung versehenen Partikelfilter (7) aufweist.

12. Abgasreinigungsanlage (2) nach Anspruch 11,
**dadurch gekennzeichnet, dass**
dem Partikelfilter (7) ein SCR-Katalysator (6) vorgeschaltet ist.

13. Abgasreinigungsanlage (2) nach einem der Ansprüche 10 bis 12,
**dadurch gekennzeichnet, dass**
der SCR-Katalysator (8) des zweiten SCR-Systems (11) zweiteilig ausgeführt ist.

14. Abgasreinigungsanlage nach Anspruch 13,
**dadurch gekennzeichnet, dass**
ein erster, stromaufwärtiger Teil (8a) des SCR-Katalysators (8) eine Eisen enthaltende Beschichtung aufweist und ein zweiter stromabwärtiger Teil (8b) des SCR-Katalysators (8) eine Kupfer enthaltende Beschichtung aufweist.

## Claims

1. Method for purifying exhaust gas from a motor vehicle combustion engine (1) with an exhaust gas purification system (2), which has a first, upstream SCR system (10) and a second, downstream SCR system (11) with an SCR catalytic converter (8), in which a reduction agent containing ammonia is dosed into the exhaust gas by means of a first dosing device (12) arranged on the inlet side of the first SCR system (10) and a second dosing device (13) arranged on the inlet side of the second SCR system (11), and nitrogen oxides contained in the exhaust gas are at least largely removed from the exhaust gas in the first and second SCR systems (10, 11), whereby, by dosing reduction agent with the second dosing device (13), a quantity of ammonia stored in the SCR catalyst (8) of the second SCR system (11) is set at least approximately to a predeterminable setpoint value (26) and a reducing agent dosing rate for the second dosing device (13) is determined as a function of the predetermined setpoint value (26), **characterised in that** when determining the reducing agent dosing rate for the second dosing device (13), consumption of ammonia stored in the SCR catalyst (8) of the second SCR system (11) by reaction with a quantity of nitrous oxide introduced into the SCR catalyst (8) is taken into account, wherein a nitrous oxide generation rate resulting from the reaction of ammonia with nitrogen oxides in the first SCR system (10) is determined and the amount of nitrous oxide introduced into the SCR catalyst (8) of the second SCR system (11) is determined from the nitrous oxide generation rate, and wherein a storage model (24) is provided for the amount of ammonia stored in the SCR catalyst (8) of the second SCR system (11), a storage model (24) is provided which comprises input variables that include at least the amounts of nitrogen oxides introduced into the SCR catalyst (8), the nitrous oxide generation rate and the reducing agent dosing rate for the second dosing device (13), determines a modelled actual quantity (28) of ammonia stored in the SCR catalyst (8) as an output variable.

2. Method according to claim 1, **characterised in that** the setpoint value (26) for the amount of ammonia stored in the SCR catalytic converter (8) is specified as a function of at least one temperature of the SCR catalytic converter (8).

3. Method according to claim 1 or 2, **characterised in that** a nitrous oxide generation model (23) is provided for the first SCR system (10), which determines the nitrous oxide generation rate as an output variable from input variables that include at least one temperature of the first SCR system (10).

4. Method according to one of claims 1 to 3, **characterised in that** an efficiency factor for the conversion of nitrous oxide with ammonia in the SCR catalytic converter (8) of the second SCR system (11) is taken into account in the storage model (24).

5. Method according to one of claims 1 to 4, **characterised in that** a fill level control is performed for an ammonia fill level representing the amount of ammonia stored in the SCR catalyst (8) of the second SCR system (11).

6. Method according to one of claims 1 to 5, **characterised in that** during level control, the setpoint value (26) for the amount of ammonia stored in the SCR catalyst (8) of the second SCR system (11) is used as the reference variable and the actual amount (28) of ammonia stored in the SCR catalyst (8) of the second SCR system (11), as determined in the storage model (24) (8) is used as a feedback measured variable in the control loop of the fill level control.

7. Method according to claim 5 or 6, **characterised in that** during level control, a control signal determining the reducing agent dosing rate for the second dosing device (13) is generated as a control variable (31).

8. Method according to one of claims 1 to 7, **characterised in that** when dividing a total reducing agent dosing quantity for the exhaust gas purification system (2) between the first and second dosing devices (12, 13), the conversion capacity for nitrogen oxides of a respective SCR system (10, 11) is taken into account.

9. Method according to claim 8, **characterised in that** the nitrous oxide generation rate of the first SCR system (10) is additionally taken into account when dividing the total reducing agent dosage amount.

10. Exhaust gas purification system (2) for a motor vehicle combustion engine (1), which has a first, upstream SCR system (10) and a second, downstream SCR system (11) with an SCR catalytic converter (8), as well as a first dosing device (12) arranged on the inlet side of the first SCR system (10) and a second dosing device (13) arranged on the inlet side of the second SCR system (11) for dosing a reduction agent containing ammonia into the exhaust gas, **characterised in that** a control device (14) is provided which is designed to control the implementation of an exhaust gas purification process according to one of claims 1 to 9.

11. Exhaust gas purification system (2) according to claim 10, **characterised in that** the first SCR system (10) has a particulate filter (7) provided with an SCR catalytically active coating.

12. Exhaust gas purification system (2) according to claim 11, **characterised in that** an SCR catalytic converter (6) is connected upstream of the particulate filter (7).

13. Exhaust gas purification system (2) according to one of claims 10 to 12, **characterised in that** the SCR catalytic converter (8) of the second SCR system (11) is designed in two parts.

14. Exhaust gas purification system according to claim 13, **characterised in that** a first, upstream part (8a) of the SCR catalyst (8) has an iron-containing coating and a second, downstream part (8b) of the SCR catalyst (8) has a copper-containing coating.

## Revendications

1. Procédé de purification des gaz d'échappement d'un moteur à combustion interne (1) de véhicule automobile, avec un dispositif de purification des gaz d'échappement (2) qui comprend un premier système SCR (10) en amont et un deuxième système SCR (11) en aval avec un catalyseur SCR (8), dans lequel un dosage d'un agent réducteur contenant de l'ammoniac dans les gaz d'échappement est effectué à l'aide d'un premier dispositif de dosage (12) disposé en amont du premier système SCR (10) et un deuxième dispositif de dosage (13) disposé en amont du deuxième système SCR (11), et les oxydes d'azote contenus dans les gaz d'échappement sont réduits par une réduction sélective avec l'ammoniac contenu dans l'agent réducteur dosé et/ou libéré à partir de celui-ci dans le premier et le deuxième système SCR (10, 11), l'azote contenue dans les gaz d'échappement étant éliminée au moins en grande partie par une réduction sélective à l'aide de l'ammoniac contenu dans le catalyseur SCR (8) du deuxième système SCR (11) est réglée au moins approximativement à une valeur de consigne prédéfinie (26) et qu'un débit de dosage d'agent réducteur pour le deuxième dispositif de dosage (13) est déterminé en fonction de la valeur de consigne prédéfinie (26), **caractérisé en ce que** lors de la détermination du taux de dosage du réducteur pour le deuxième dispositif de dosage (13), on tient compte d'une consommation d'ammoniac stocké dans le catalyseur SCR (8) du deuxième système SCR (11) par réaction avec une quantité de protoxyde d'azote introduite dans le catalyseur SCR (8), un taux de production de protoxyde d'azote étant déterminé par réaction de l'ammoniac avec les oxydes d'azote dans le premier système SCR (10) et à partir duquel la quantité de protoxyde d'azote introduite dans le catalyseur SCR (8) du deuxième système SCR (11) est déterminée, et dans lequel, pour la quantité d'ammoniac stockée dans le catalyseur SCR (8) du deuxième système SCR (11), un modèle de stockage (24) est prévu, qui comprend des grandeurs d'entrée qui comprennent au moins les quantités d'oxydes d'azote introduites dans le catalyseur SCR (8), le taux de production de protoxyde d'azote et le débit de dosage d'agent réducteur pour le deuxième dispositif de dosage (13), détermine une quantité réelle modélisée (28) d'ammoniac stocké dans le catalyseur SCR (8) comme grandeur de sortie.

2. Procédé selon la revendication 1, **caractérisé en ce que** la valeur de consigne (26) pour la quantité d'ammoniac stockée dans le catalyseur SCR (8) est prédéfinie en fonction d'au moins une température du catalyseur SCR (8).

3. Procédé selon la revendication 1 ou 2, **caractérisé en ce que** pour le premier système SCR (10), il est prévu un modèle de production de protoxyde d'azote (23) qui détermine le taux de production de protoxyde d'azote comme grandeur de sortie à partir de grandeurs d'entrée qui comprennent au moins une température du premier système SCR (10).

4. Procédé selon l'une des revendications 1 à 3, **caractérisé en ce qu'**un rendement pour la conversion du protoxyde d'azote avec de l'ammoniac dans le catalyseur SCR (8) du deuxième système SCR (11) est pris en compte dans le modèle de stockage (24).

5. Procédé selon l'une des revendications 1 à 4, **caractérisé en ce qu'**une régulation du niveau de remplissage est effectuée pour un niveau de remplissage d'ammoniac représentant la quantité d'ammoniac stockée dans le catalyseur SCR (8) du deuxième système SCR (11).

6. Procédé selon l'une des revendications 1 à 5, **caractérisé en ce que** lors de la régulation du niveau de remplissage, la valeur de consigne (26) pour la quantité d'ammoniac stockée dans le catalyseur SCR (8) du deuxième système SCR (11) est utilisée comme grandeur de référence et la quantité réelle (28) d'ammoniac stocké dans le catalyseur SCR (8), déterminée dans le modèle de stockage (24), est utilisée comme grandeur de mesure rétroactive dans le circuit de régulation du niveau.

7. Procédé selon la revendication 5 ou 6, **caractérisé en ce que** lors de la régulation du niveau de remplissage, un signal de commande déterminant le débit de dosage de l'agent réducteur pour le deuxième dispositif de dosage (13) est généré en tant que grandeur de réglage (31).

8. Procédé selon l'une des revendications 1 à 7, **caractérisé en ce que** lors de la répartition d'une quantité totale de dosage d'agent réducteur pour l'installation d'épuration des gaz d'échappement (2) entre le premier et le deuxième dispositif de dosage (12, 13), on tient compte d'une capacité de conversion des oxydes d'azote d'un système SCR respectif (10, 11).

9. Procédé selon la revendication 8, **caractérisé en ce que** lors de la répartition de la quantité totale de réducteur dosée, le taux de production de protoxyde d'azote du premier système SCR (10) est également pris en compte.

10. Système de purification des gaz d'échappement (2) pour un moteur à combustion interne (1) de véhicule automobile qui comprend un premier système SCR (10) en amont et un deuxième système SCR (11) en aval avec un catalyseur SCR (8), ainsi qu'un premier dispositif de dosage (12) disposé du côté entrée du premier système SCR (10) et un deuxième dispositif de dosage (13) disposé du côté entrée du deuxième système SCR (11) pour doser un agent réducteur contenant de l'ammoniac dans les gaz d'échappement, **caractérisé en ce qu'**il est prévu un dispositif de commande (14) qui est conçu pour commander la mise en œuvre d'un procédé d'épuration des gaz d'échappement selon l'une des revendications 1 à 9.

11. Système de purification des gaz d'échappement (2) selon la revendication 10, **caractérisé en ce que** le premier système SCR (10) comprend un filtre à particules (7) muni d'un revêtement catalytiquement actif SCR.

12. Système de purification des gaz d'échappement (2) selon la revendication 11, **caractérisé en ce qu'**un catalyseur SCR (6) est monté en amont du filtre à particules (7).

13. Système de purification des gaz d'échappement (2) selon l'une des revendications 10 à 12, **caractérisé en ce que** le catalyseur SCR (8) du deuxième système SCR (11) est conçu en deux parties.

14. Système de purification des gaz d'échappement selon la revendication 13, **caractérisé en ce qu'**une première partie amont (8a) du catalyseur SCR (8) comporte un revêtement contenant du fer et une deuxième partie aval (8b) du catalyseur SCR (8) comporte un revêtement contenant du cuivre.
